# EUROPEAN PATENT APPLICATION

(11) **EP 1 801 312 A1**
(43) Date of publication of application: **27.06.2007**
(21) Application number: 05112541.7
(22) Date of filing: 20.12.2005
(51) Int. Cl.: E04F 15/18

(54) **Acoustic damping and thermal insulation material**

(71) Applicant: Bubble and Foam Industries, 8570 Anzegem (BE)
(72) Inventor: Broodcoorens, Eric, 8570, Anzegem (BE)
(74) Representative: Quintelier, Claude

(57) **Abstract**

An acoustic damping and thermal insulation material provided to be applied on a floor, in particular as an acoustic and thermal insulation layer for a wooden or laminated floor, said material comprising a water vapour barrier layer and a foam layer, and wherein a non-woven layer is applied between said water vapour barrier layer and said foam layer.

## Description

The present invention relates to an acoustic damping and thermal insulation material provided to be applied on a floor, in particular as an acoustic and thermal insulation layer for a wooden or laminated floor, said material comprising a water vapour barrier layer and a foam layer.

Such an acoustic damping and thermal insulation material is known and used in the building industry where wood or laminated elements are used as a floor covering. A wooden or a laminated floor covering have the disadvantage to propagate the sound originating from persons who are walking on it. This propagation of sound is a nuisance for the neighbours and adversely affects their living comfort. In order to limit the sound propagation through the walls and the ceiling an acoustic damping and thermal insulation material is applied on the floor before the wooden or laminated covering is applied.

A drawback of the known acoustic damping and thermal insulation material is that, unless that an expensive material is used, the acoustic damping capacity remains insufficient.

The object of the invention is to provide an acoustic damping and thermal insulation material at a reasonable manufacturing price and with an improved acoustic damping capacity.

An acoustic damping and thermal insulation material according to the present invention is therefore characterised in that a non-woven layer is applied between said water vapour barrier layer and said foam layer. The use of a non-woven layer placed between the water vapour barrier layer and the foam layer increases surprisingly and substantially the acoustic damping capacity of the material. As a non-woven is not an expensive material, the price of it is only a little higher.

A first preferred embodiment of an acoustic damping and thermal insulation material according to the invention is characterised in that said non-woven layer is formed by a cross-laid wadding. This gives the non-woven layer a coherent structure, which on its turn reduces the sound propagation properties of the material.

A second preferred embodiment of an acoustic damping and thermal insulation material according to the invention is characterised in that said wadding is made of polyester fibres blended with bi-component fibres. Polyester fibres are generally inexpensive whereas the bi-component fibres offer an appropriate bonding of the polyester fibres.

A third preferred embodiment of an acoustic damping and thermal insulation material according to the invention is characterised in that said foam layer is made of polyolefin or synthetic foam. Polyolefin or synthetic foam have excellent resilience properties and is therefor appropriate to absorb vibrations and impulses generated by a person wearing shoes stepping on the wooden or laminated floor.

Preferably the polyethylene foam has a density of at least 20 kg/m2, in particular 25 kg/m2. Such a density offers sufficient resilience properties.

Preferably said layers are stick to one another. In such a manner the material forms a complex and the three layers can be applied simultaneously, thereby saving some working hours.

The invention will now be described in more details with reference to the drawings illustrating a preferred embodiment of an acoustic damping and thermal insulation material according to the invention. In the drawings :
figure 1 shows an example of an acoustic damping and thermal insulation material according to the present invention; and
figure 2 shows this acoustic damping and thermal insulation material when applied on a floor.

In the drawings a same reference sign has been allocated to a same or analogous element.

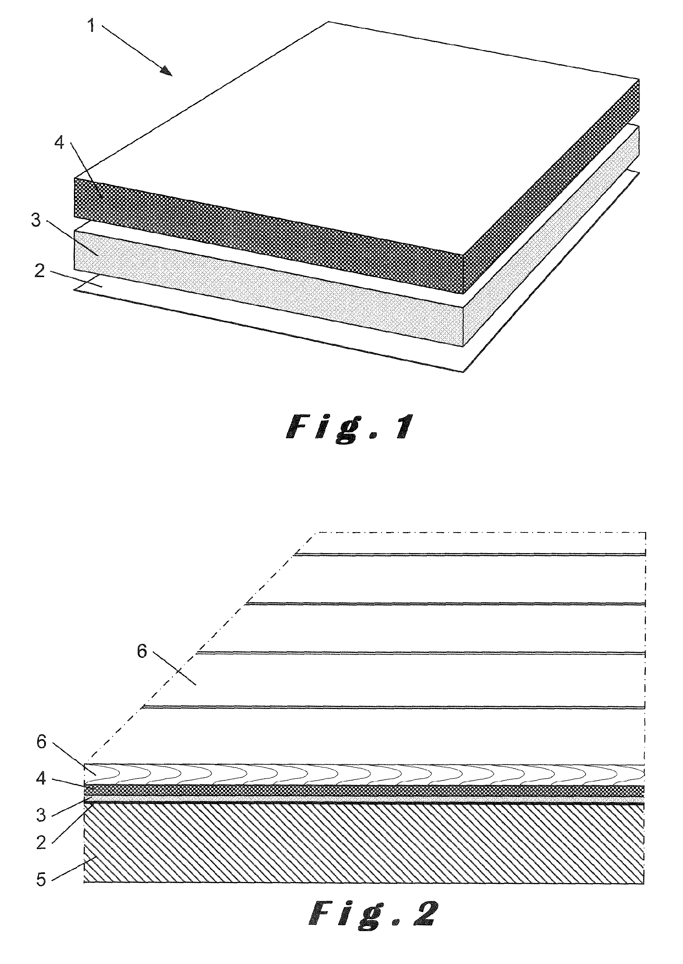

Figure 1 shows an example of an acoustic damping and thermal insulation material 1 according to the present invention. The acoustic damping and thermal insulation material 1 comprises a water vapour barrier layer 2 on which a non-woven layer 3 is applied. A foam layer 4 is applied on the non-woven layer 3. Preferably the layers 2, 3 and 4 are stick to one another by means of an adhesive substance or thermobonding. A mechanical bonding of the layers could also be applied , such a for example stitching. It should be noted that it is not a requirement that the different layers are stick to one another and that the result could also be obtained by a loose superposition of the layers. If the different layers are however stick to one another a quicker and more convenient application of the acoustic damping and thermal insulation material is possible.

As is shown in figure 2, the acoustic damping and thermal insulation material 1 is applied on a floor 5, for example made of concrete or stone. The material 1 is applied in such a manner that the water vapour barrier layer 2 is in contact with the floor. The wooden or laminated elements 6 are then placed on the material 1.

The water vapour barrier layer 2 is preferably made of a low density polyethylene foil having a thickness situated in a range of 60 to 100 µm, in particular 70 µm. This water vapour barrier layer prevents that water vapour reaches the non-woven 3 and the foam layer 4. Indeed, the absorption of water vapour by the non-woven or the foam layer would cause them to compress, thereby reducing their sound absorption properties. The water vapour barrier layer preferably has a water vapour transmission rate of 8 g/m2/24 hours (ASTM 96E; 38° C, 90 % RH). The surface tension of the layer 2 ranges from 38-42 mN/m and the tensile at yield is 13 N/mm2.

The non-woven layer 3 is formed by a cross-laid wadding preferably made of polyester fibres blended with bi-component fibres. Polyester fibres have the advantage of being cheap. The wadding is thermobonded by means of the bi-component fibres. The non-woven layer provides, due to its structure resilience properties to the acoustic damping and thermal insulation material 1, thereby surprisingly improving the sound absorption properties of the material.

The non-woven layer preferably has a density of 60 g/m2, so that its presence does not substantially increase the weight of the complete material 1. Preferably, the non-woven layer has a thickness in the range 1 to 1,5 cm, in particular 1,2 cm. The non-woven layer has a rather weak tensile strength ad a high elongation capacity when submitted to a high extension force.

The foam layer 4 is preferably made of polyethylene foam having a density of at least 20 kg/m2, in particular 25 kg/m2. The foam has a tensile strength of 0,31 N/mm2 in longitudinal direction and 0,23 N/mm2 in transversal direction. The foam has a poor water absorption capacity and a poor thermal conductivity. The polyethylene foam layer has a thickness of at least 2 mm, in particular 3 mm.

The foam layer 4 has a rather high resistance to pressure and is difficult to compress without having a hard structure. In particular it has a pressure resistance ranging from 0,02 N/mm2 at 10 % up to 0,20 N/mm2 at 70 % compression.

The combination of the foam layer 4 and the non-woven layer increases substantially and surprisingly the sound absorption properties of the complex formed by the three layers 2, 3 and 4. Due to its resilience properties the foam layer 4 absorbs and diffuses the sound, whereas the non-woven layer, which is more resilient than the foam layer, even more absorbs and dampens the sound induced by a stepping on the floor 6. The foam layer 4, which is in contact with the wooden or laminated elements provides, due to its damping properties and its high pressure resistance sufficient absorption without giving to the person walking over the floor 6 an impression that he or she is walking on a floating surface. The sound induced into the foam layer is further absorbed by the non-woven layer, which, due to its structure and density spreads the sound into its structure and dampens the latter.

## Claims

1. An acoustic damping and thermal insulation material provided to be applied on a floor, in particular as an acoustic and thermal insulation layer for a wooden or laminated floor, said material comprising a water vapour barrier layer and a foam layer, **characterised in that** a non-woven layer is applied between said water vapour barrier layer and said foam layer.

2. The acoustic damping and thermal insulation material as claimed in claim 1, **characterised in that** said non-woven layer is formed by a cross-laid wadding.

3. The acoustic damping and thermal insulation material as claimed in claim 2, **characterised in that** said wadding is made of polyester fibres blended with bi-component fibres.

4. The acoustic damping and thermal insulation material as claimed in claim 2, **characterised in that** said wadding is thermobonded by means of said bi-component fibres.

5. The acoustic damping and thermal insulation material as claimed in any one of the claims 1 to 4, **characterised in that** said foam layer is made of polyethylene foam.

6. The acoustic damping and thermal insulation material as claimed in claim 5, **characterised in that** said polyethylene foam has a density of at least 20 kg/m2, in particular 25 kg/m2.

7. The acoustic damping and thermal insulation material as claimed in claim 5 or 6, **characterised in that** said polyethylene foam layer has a thickness of at least 2 mm, in particular 3 mm.

8. The acoustic damping and thermal insulation material as claimed in any one of the claim 1 to 7, **characterised in that** said layers are stick to one another.
